Europäisches Patentamt

European Patent Office

Office européen des brevets

(11) Veröffentlichungsnummer: **0 443 189 A2**

(12) **EUROPÄISCHE PATENTANMELDUNG**

(21) Anmeldenummer: **90125203.1**

(22) Anmeldetag: **21.12.90**

(51) Int. Cl.5: **H04M 1/65**

(30) Priorität: **22.12.89 DE 3942544**

(43) Veröffentlichungstag der Anmeldung:
**28.08.91 Patentblatt 91/35**

(84) Benannte Vertragsstaaten:
**AT BE CH DE FR GB IT LI SE**

(71) Anmelder: **GRUNDIG E.M.V.**
**Elektro-Mechanische Versuchsanstalt Max Grundig holländ. Stiftung & Co. KG.**
**Kurgartenstrasse 37**
**W-8510 Fürth/Bay.(DE)**

(72) Erfinder: **Mittelstaedt, Rainer, Grundig E.M.V.,**
**Max Grundig**
**holländ, Stiftung & Co. Kg., Kurgartenstrasse 37**
**W-8510 Fuerth(DE)**

(74) Vertreter: **Dreykorn-Lindner, Werner, Dipl.-Ing.**
**GRUNDIG E.M.V. Elektro-Mechanische Versuchsanstalt Max Grundig holländ.Stiftung & Co. KG Lizenz- und Patentabteilung Kurgartenstrasse 37**
**W-8510 Fürth/Bayern(DE)**

(54) **Nachrichtenübertragungssystem mit einer Teilnehmereinrichtung zur Weiterleitung von Rufsignalen oder Nachrichten zu einem Funkempfänger.**

(57) Nachrichtenübertragungssysteme, welche Teilnehmereinrichtungen in Form von Anrufbeantwortern mit Nachrichtenaufzeichnung, Rufweiterleitung und Fernabfrage aufweisen sind bekannt. Ist der Besitzer des Anrufbeantworters unterwegs, so kann nach Aufzeichnung der Nachricht des Anrufers automatisch eine Weiterleitung des Rufsignals über den europäischen Funkrufdienst zu einem Funkrufempfänger erfolgen. Zur Rufweiterleitung enthält der Anrufbeantworter einen Wählautomaten. Weiterhin ist ein Funkrufdienst (City-Ruf) bekannt, bei dem nicht nur Funkrufsignale, sondern auch Ziffern und kurze Texte (Display-Paging) übertragen und auf der Anzeigeeinrichtung (Display) des Funkrufempfängers angezeigt werden.

Das neue Nachrichtenübertragungssystem ermöglicht eine schnelle und fehlerfreie Nachrichtenübermittlung.

Hierzu enthält die Teilnehmereinrichtung eine Steuereinrichtung, welche den Empfang von Quittungssignalen, z.B. Sprachansagen und/oder Signalen nach dem Mehrfrequenz-Codewahl-Verfahren, von der Funkzentrale überwacht und welche gegebenenfalls eine erneute Nachrichtenübertragung einleitet.

Das neue Nachrichtenübertragungssystem stellt sicher, daß ein gerufener Teilnehmer, welcher unterwegs ist, schnell auf einen Anruf reagieren kann.

Fig. 1

## NACHRICHTENÜBERTRAGUNGSSYSTEM MIT EINER TEILNEHMEREINRICHTUNG ZUR WEITERLEITUNG VON RUFSIGNALEN ODER NACHRICHTEN ZU EINEM FUNKEMPFÄNGER

Die Erfindung betrifft ein Nachrichtenübertragungssystem nach dem Oberbegriff des Patentanspruchs 1.

Nachrichtenübertragungssysteme bei denen ankommende Anrufe (bei einem personell nicht besetzten Teilnehmeranschluß) durch einen automatisch arbeitenden Anrufbeantworter (private Zusatzeinrichtung) entgegengenommen werden sind bekannt. Zur Durchführung dieses Vorgangs muß lediglich eine Schalteinrichtung betätigt werden, die eine Umschaltung der Hauptanschlußleitung vom Fernsprechapparat auf den automatischen Anrufbeantworter bzw. Auskunftgeber vornimmt.

Weiterhin sind auch private Zusatzeinrichtungen bekannt, bei denen automatische Anrufbeantworter oder Auskunftgeber mit automatischen Wählhilfen und Wahlwiederholer (Wählautomaten) kombiniert sind, wie dies beispielsweise in der DE-OS 36 08 238 bzw. der inhaltsgleichen DE-OS 36 08 239 beschrieben ist. Die Leistungsmerkmale des daraus bekannten Telefoncomputers sind u.a.: "Nachrichtenaufzeichnung, Fernabfrage und Rufweiterleitung". Rufweiterleitung bedeutet im Zusammenhang mit privaten Zusatzeinrichtungen stets folgende Verfahrensabfolge:
Mit dem Anrufbeantworter wird die Nachricht des Anrufers aufgezeichnet, danach wird der Wählautomat aktiviert und der Besitzer des Anrufbeantworters wird automatisch über den europäischen Funkrufdienst oder über das Fernmeldenetz gerufen. Hierzu leitet der Wählautomat einen Verbindungsaufbau anhand einer oder mehrerer vorher gespeicherter Rufnummern ein und beim Melden des angerufenen Teilnehmers wird dieser gebeten (Ansagetext), den Besitzer des Anrufbeantworters an den Apparat zu holen. Die vom Anrufbeantworter aufgezeichnete Nachricht des Anrufers kann dann vom Besitzer des Anrufbeantworters über das Fernmeldenetz mit dem mitgeführten Codesender ferngesteuert abgefragt werden. Die Gesprächsgebühren gehen dabei nicht zu Lasten des Angerufenen, sondern zu Lasten des Besitzers des Anrufbeantworters.

In der DE-OS 36 08 238 bzw. DE-OS 36 08 239 ist die Programmierung des Telefoncomputers im einzelnen näher beschrieben und erläutert. Hierzu ist eine Vielzahl von Eingaben vorzunehmen: z.B. Datum und Uhrzeit, Alarm- und Terminzeiten, Aufnahmezeit für ankommende Gespräche, Fernabfragecodes, Eurosignalrufnummern oder sonstige Rufnummern oder Rufnummern und Amtskennziffern für Kurzwahl, Zielwahl usw..

Beim europäischen Funkrufdienst ist der Funkrufempfänger über maximal vier Rufnummern erreichbar. In der Funkrufzentrale werden Codesignale gebildet, die den mit der Funkrufzentrale verbundenen UKW-Sendern zur Rufaussendung zugeführt werden. Die ausgesendeten Codesignale werden vom Funkrufempfänger empfangen und decodiert. Bei Übereinstimmung zwischen den im Decoder eingestellten Code mit dem empfangenen Code werden ein akustisches und ein optisches Signal erzeugt. Die Bedeutung der Codesignale muß zwischen dem Funkrufteilnehmer und dem anrufenden Teilnehmer abgesprochen sein.

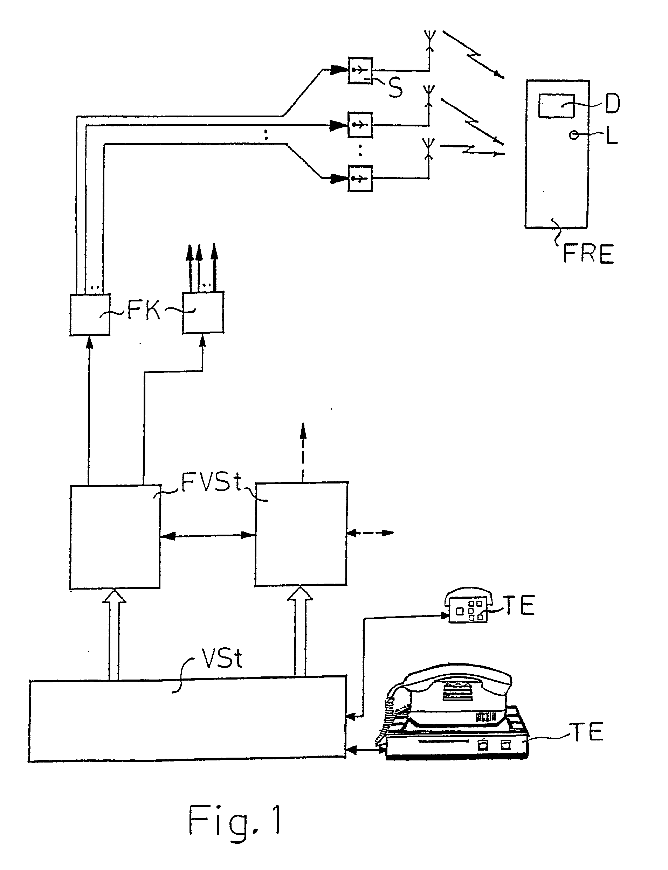

Weiterhin ist ein als City-Ruf bezeichneter Funkrufdienst bekannt, welcher in Fig. 1 dargestellt ist. Dabei werden kurze Informationen als Ziffern oder Texte auf dem Display D des Funkrufempfängers FRE dargestellt. Die Informationsübermittlung ist beim City-Ruf in drei Rufklassen möglich: Nur-Ton für Ton-Funkrufempfänger FRE, die entsprechend wie beim europäischen Funkrufdienst vier verabredete Signale empfangen können; Numeric für Numeric-Funkrufempfänger FRE zum Empfang von bis zu fünfzehn Ziffern oder Sonderzeichen und Alphanumeric für Alphanumeric-Funkrufempfänger FRE zum Empfangen von Text (Ziffern- und Buchstabenfolgen) bis zu achzig Zeichen.

Der City-Rufdienst wird in regionalen Zonen (sog. Rufzonen) ausgestrahlt, wobei das Versorgungsgebiet in etwa den gesamten Einzugsbereich einer großen Stadt abdeckt.

Das Funkrufnetz besteht aus den Funkrufvermittlungsstellen FVSt, den Funkrufkonzentratoren FK, den Sendern S und den Funkrufempfängern FRE. Die Funkrufvermittlungsstelle FVSt verwaltet die Teilnehmerdaten und steuert die Sender S, über welche ein Ruf ausgestrahlt werden soll. Der Zugang von den öffentlichen Telekommunikationsnetzen zum Funkrufnetz ist unter gleicher Zugangskennzahl möglich und hängt nur von der Rufklasse und dem jeweiligen Eingabegerät für die City-Ruf-Informationen ab. Als Eingabegeräte dienen die beim Teilnehmer installierten Endgeräte für die verschiedenen Postdienste, z.B. Fernsprechapparat, Telex-, Teletex- oder Btx-Endgerät. Für eine Ziffern- und Texteingabe von einem einfachen Fernsprechapparat aus sind besondere Zusatzgeräte, z.B. akustisch ankoppelbare MFV-Geber, erforderlich, da Numeric-Funkrufempfänger FRE das Mehrfrequenz-Wählverfahren (MFV) erfordern. Soll von einem Personal-Computer oder Home-Computer eine alphanumerische Information eingegeben werden, so ist dieser mit einem Akustikkoppler oder Modem zu verbinden.

Weiterhin ist aus Zeitschrift: "net", 37 (1983), Heft 2, Seiten 48 bis 53, eine Personenruf-Funkanlage für landesweite Rufnetze bekannt, bei der außer Sprachdurchsagen auch bis 10-stellige Ziffern übertragen werden können. Hierzu ist in der Funkrufzentrale unter anderem eine sog. Anpassungsübertragung vorgesehen, welche die bis zu achtzehn Ziffern umfassende Wählinformation des rufenden Teilnehmers speichert und auch den Dialog des rufenden Teilnehmers mit dem Rufprozessor ermöglicht. Weiterhin ist eine Ankopplung der Anpassungsübertragung an eine Sprachsammelschiene für eine zeitlich begrenzte Sprachmitteilung an den Funkrufempfänger vorgesehen. Hierzu wird für kurze Zeit ein Sprechweg vom Mikrophon des Anrufers zum Lautsprecher des Funkrufempfängers durchgeschaltet. Für Spezialanwendungen - z.B. Feuerwehr - können Rufe auch durch Kontakte ausgelöst werden.

In der nicht vorveröffentlichen deutschen Patentanmeldung P 39 20 982.2 der Anmelderin ist eine Teilnehmereinrichtung vorgeschlagen worden, wobei der anrufende Teilnehmer numerische, alphanumerische und/oder gesprochene Nachrichten hinterlassen kann. Diese Nachrichten werden im Zwischenspeicher der Teilnehmereinrichtung zwischengespeichert. Nach dem Auslösen der Verbindung werden diese automatisch zu einem Funkrufempfänger mit optischer und/oder akustischer Ausgabeeinrichtung übermittelt. Der rufende Teilnehmer kann auch dann eine Nachricht zu einem Funkrufempfänger übermitteln, wenn er nicht die Funkrufteilnehmernummer kennt. Ist die Teilnehmereinrichtung in Form eines Anrufbeantworters mit Nachrichtenaufzeichnung ausgestaltet, so ist es für den anrufenden Teilnehmer nicht erforderlich (im Hinblick auf eine rasche Übermittlung seiner Nachricht) den Besitzer des Anrufbeantworters, welcher unterwegs ist, über den Funkrufdienst zu erreichen. Da der anrufende Teilnehmer seine Nachricht hinterlassen kann, fallen somit keine sonst erforderlichen zweimaligen Gebühren an, sondern die zweite Gesprächsgebühr geht zu Lasten des Besitzers des Anrufbeantworters.

Durch die in der deutschen Patentanmeldung P 39 20 982.2 vorgeschlagene Zusatzfunktion der Teilnehmereinrichtung, insbesondere des Anrufbeantworters, erübrigt sich ein Anruf des Besitzers des Anrufbeantworters von unterwegs aus. Weiterhin entfällt somit die sonst erforderliche Gesprächsgebühr für die ferngesteuerte Abfrage einer vom Anrufbeantworter aufgezeichneten Nachricht des Anrufers. Je nach Ausstattung des Funkrufempfängers kann auf dem Display des Funkrufempfängers die zwischengespeicherte kurze Information als Ziffern oder Texte dargestellt werden. Weist der Funkrufempfänger auch eine akustische Ausgabeeinrichtung auf, so können auch Sprachdurchsagen übermittelt werden. Da moderne Anrufbeantworter in der Regel MFV-fähig sind und Einrichtungen zur Rufweiterleitung über den europäischen Funkrufdienst aufweisen, ist als zusätzlicher Geräteaufwand lediglich der zusätzliche Zwischenspeicher erforderlich.

Durch automatisch arbeitende Teilnehmereinrichtungen, z.B. Anrufbeantworter, und Funkrufempfänger kann die Erreichbarkeit eines gerufenen, aber abwesenden Teilnehmers verbessert werden. Bedingt durch die Konzeption der Funkrufdienste ist zwar eine schnelle Nachrichtenübermittlung zur Funkzentrale möglich, jedoch es ist nicht sichergestellt, daß die empfangene Nachricht auch zuverlässig von der Funkzentrale gesendet wird.

Schließlich ist aus der EP-B1-0 067 787 ein Funkrufsystem bekannt, bei dem der rufende Teilnehmer nach Eingabe der Nachricht, beispielsweise eine Rufnummer, eine Mitteilung (Ansage) von einer sogenannten Anpassungsübertragung erhält. Die Anpassungsübertragung dient dabei zur Einspeisung der Gebührenimpulse, Ansagen und Hörtöne. Mit Beginn der Ansage, welche dem rufenden Teilnehmer mitteilt, daß beim Auftreten eines Hörtons die Verbindung auszulösen ist, erfolgt die Übermittlung der Gebührenimpulse. Hat die Verbindung bis zum Ende der Ansage bestanden, d.h. wurde diese nicht vorzeitig vom rufenden Teilnehmer ausgelöst, so erfolgt erst zu diesem Zeitpunkt die Aussendung des Funkrufs an den Funkrufempfänger durch die Funkrufzentrale. Als Quittung für den abgesetzten Funkruf erhält der rufende Teilnehmer anschließend den Hörton, welcher ihn zum Auslösen der Verbindung auffordert.

Der Erfindung liegt die Aufgabe zugrunde, ein Nachrichtenübertragungssystem derart auszugestalten, daß eine rasche und fehlerfreie Übermittlung von Nachrichten zu einem Funkempfänger, insbesondere Funkrufempfänger mit optischer und/oder akustischer Ausgabeeinrichtung, eingeleitet wird.

Diese Aufgabe wird bei einem gattungsgemäßen Nachrichtenübertragungssystem durch die kennzeichnenden Merkmale des Patentanspruchs 1 gelöst.

Durch den Austausch von Quittungssignalen zwischen Teilnehmereinrichtung und Funkzentrale des erfindungsgemäßen Nachrichtenübertragungssystems ist in jeder Phase des Verbindungsaufbaus und des Übermittlungsvorgangs eine hohe Übertragungssicherheit gewährleistet. Eine Falschverbindung oder fehlende/falsche Signale der Verbindungssteuerung werden durch die automatisch arbeitende Teilnehmereinrichtung zuverlässig erkannt. Wird als Teilnehmereinrichtung ein Anrufbeantworter benutzt, so kann zudem eine Protokollführung im Anrufbeantworter vorgenommen werden.

Das Nachrichtenübertragungssystem gemäß Patentanspruch 2 weist den Vorteil auf, daß für die Erzeugung und Auswertung der Quittungssignale bereits vorhandene Einrichtungen mitbenutzt werden können. Handelt es sich bei der Teilnehmereinrichtung beispielsweise um einen modernen Anrufbeantworter, so ist ohnehin für die Fernabfrage eine Auswerteeinrichtung für Signale nach dem Mehrfrequenz-Codewahl-Verfahren vorhanden.

Die Ausführungsform des Nachrichtenübertragungssystem gemäß Patentanspruch 3 erfordert bei einer sprachgesteuerten Teilnehmereinrichtung keinen zusätzlichen Schaltungsaufwand. Gleiches gilt für die Funkzentrale. Um eine zusätzliche numerische Information ohne Zusatz-Eingabegeräte auf der Teilnehmerseite über das Fernsprechnetz zur Funkrufzentrale zu übertragen, ist aus der DE-OS 35 19 972 eine Funkrufanordnung bekannt, bei der in der Funkrufzentrale eine Anordnung zur Spracherkennung angeordnet ist. Diese in der Funkrufzentrale angeordnete Anordnung zur Spracherkennung führt eine Signalumformung der vom Fernsprechteilnehmer gesprochenen numerischen Information in zur Aussendung über die Funkrufsender geeignete Signale durch.

Ist gemäß der Ausführungsform nach Patentanspruch 4 in der Teilnehmereinrichtung eine Funkuhr angeordnet, so wird die Übertragungssicherheit noch weiter verbessert und eine zuverlässige Zeitsteuerung ermöglicht.

Die Erfindung wird im folgenden anhand einer in der Zeichnung dargestellten Ausführungsformen näher beschrieben und erläutert.

Es zeigt:

Fig. 1    die Netzstruktur eines Funkrufdienstes,

Fig. 2    eine Ausführungsform der erfindungsgemäßen Teilnehmereinrichtung.

Fig. 1 zeigt die Struktur des Funkrufdienstes City-Ruf in der Bundesrepublik Deutschland. Der City-Ruf kann von den Teilnehmern auch grenzüberschreitend genutzt werden, beispielsweise kann der Funkrufdienst Alphapage in Frankreich, Teledrine in Italien sowie Europage in Großbritannien genutzt werden. Hierzu muß sich der City-Ruf-Teilnehmer in eine internationale europäische Rufzone einbuchen. Für die Verwendung in Funkrufsystemen wurde ein europäischer Standard gemäß "CCIR Radio Paging Code No. 1" (Pocsag-Code) vereinbart. Die Struktur des Poscag-Codes und der Aufbau der Codewörter (Adreß- und Nachrichten-Codewörter) sind an die Eigenschaften des Funkübertragungskanals angepaßt.

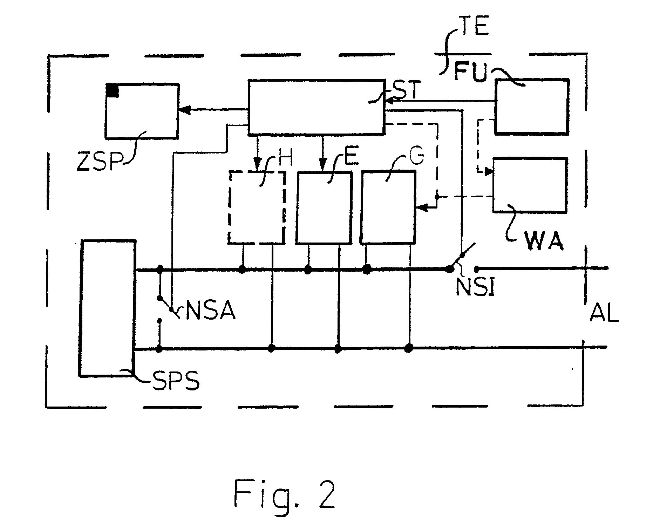

Die Erfindung wird im folgenden anhand einer in der Fig. 2 dargestellen Ausführungsform einer Teilnehmereinrichtung näher beschrieben und erläutert.

Bei der in der Fig. 2 dargestellten Ausführrungsform wird von der Anwendung bei privaten Zusatzeinrichtungen, insbesondere bei einem Anrufbeantworter, ausgegangen.

Die in der Fig. 2 dargestellte Teilnehmereinrichtung TE steht über die Hauptanschlußleitung AL mit dem Fernmeldenetz in Verbindung. In der Teilnehmereinrichtung TE ist eine Steuereinrichtung ST angeordnet, welche die verschiedenen Funktionen der Teilnehmereinrichtung TE und den Austausch vermittlungstechnischer Informationen (z.B. Wählinformationen) zwischen der Teilnehmereinrichtung TE und den Vermittlungsstellen des Fernmeldenetzes steuert. Die Erzeugung der Wählinformation erfolgt in der Teilnehmereinrichtung TE entweder mit einem Nummernschalter-Impulskontakt NSI oder mit einem nach dem Mehrfrequenz-Codewahl-Verfahren arbeitenden Generator G. Die Steuereinrichtung ST ist weiterhin mit einem NSA-Kontakt NSA verbunden, welcher zur Abschaltung von Sprechschaltung SPS während der Wahl dient.

Weiterhin ist in der Teilnehmereinrichtung TE ein Hörtondetektor H und/oder eine Auswerteeinrichtung E für Signale beispielsweise nach dem DTMF-Verfahren (Doppelton-Mehrfrequenz-Verfahren) angeordnet, welche mit der Steuereinrichtung ST verbunden sind. Moderne Anrufbeantworter enthalten in der Regel ohnehin die Auswerteeinrichtung E und den Generator G. Dabei dient die Auswerteeinrichtung E zur Decodierung der für die Fernabfrage des Anrufbeantworters erforderlichen Codeworte. Zusätzlich kann der Generator G auch zur Signalumsetzung bei der Zwischenspeicherung und Übermittlung der Nachrichten dienen.

Schließlich ist die Steuereinrichtung ST mit einem Zwischenspeicher ZSP verbunden, in welchem die vom anrufenden Teilnehmer eingegebenen numerischen Nachrichten sowie die vom Benutzer eingegebenen Wählinformationen (z.B. Rufnummern) zwischengespeichert werden. Die Steuereinrichtung ST kann auch die Funktion eines Wählautomaten WA übernehmen.

Die neue Zusatzfunktion des erfindungsgemäßen Nachrichtenübertragungssystems wird anhand der Übermittlung von zwischengespeicherten Nachrichten zu einem Funkrufempfänger FRE mit optischer und/oder akustischer Ausgabeeinrichtung näher beschrieben und erläutert.

Kommt über die Hauptanschlußleitung AL in der Teilnehmereinrichtung TE ein Rufsignal an, so wird dieses von einer Rufsignal-Erkennungsschaltung erkannt und ein Steuersignal für die Steuereinrichtung ST erzeugt. Gesteuert durch die Steuereinrichtung ST wird beispielsweise der im Zwischenspeicher ZSP enthaltene Ansagetext ausgelesen und zum anrufenden Teilnehmer über die Hauptanschlußleitung AL übermittelt. Der anrufende Teilnehmer kann entweder eine gesprochene Nachricht hinterlassen oder er gibt an seiner Teilnehmereinrichtung numerische Nachrichten für den Funkrufempfänger FRE ein. Diese numerische Nachricht kann z.B. die Rufnummer (Fernsprechteilnehmerrufnummer) des Fernsprechteilnehmers sein. Im Zwischenspeicher ZSP wird die Rufnummer zwischengespeichert und der anrufende Teilnehmer erhält die Schlußansage. Nach dem Auslösen der Verbindung leitet der Wählautomat WA bzw. die Steuereinrichtung ST anhand der im Speicher ZSP gespeicherten Wählinformation einen Verbindungsaufbau zum Funkrufempfänger FRE ein. Ist die Verbindung zur Funkrufvermittlungsstelle FVSt hergestellt, so wird die im Zwischenspeicher ZSP befindliche Information, d.h. die Fernsprechteilnehmerrufnummer, ausgelesen und übertragen. Nach erfolgter Weiterleitung überwacht die in der Teilnehmereinrichtung TE angeordnete Steuereinrichtung ST den Empfang von Quittungssignalen, insbesondere von Signalen nach dem Mehrfrequenz-Codewahl-Verfahren. Die verschiedenen Signale, denen verschiedene Betriebszustände der Funkrufvermittlungsstelle FVSt entsprechen, werden von der Auswerteeinrichtung E detektiert. Gegebenenfalls wird, gesteuert durch Steuereinrichtung ST und Funkuhr FU, eine erneute Nachrichtenübertragung eingeleitet. Die Funkuhr FU kann auch die Funktion einer Steuereinrichtung zur Zeitprotokollführung für eingegangene Nachrichten übernehmen. Bei der Nachrichtenübermittlung (auch bei der Fernabfrage) bzw. bei der Abfrage können das Datum und die Uhrzeit der eingegangenen Nachricht mitgeteilt (z.B. als Sprachmitteilung, Anzeige am Display) werden.

Die neue Zusatzfunktion des Nachrichtenübertragungssystems kann auch nachträglich im europäischen Funkrufdienst oder auch in anderen Systemen, z.B. Fernwirksystemen, eingerichtet werden. Die hierbei in der Vermittlungseinrichtung vorzunehmenden Änderungen sind vergleichsweise gering. Bei automatisch Nachrichten absendenden Teilnehmereinrichtungen wird mit geringem zusätzlichen Schaltungsaufwand eine erheblich höhere Übertragungssicherheit erreicht.

**Patentansprüche**

1. Nachrichtenübertragungssystem mit einer Teilnehmereinrichtung (TE), insbesondere Anrufbeantworter, zur Weiterleitung von Rufsignalen oder Nachrichten zu einem Funkempfänger (FRE), insbesondere Funkrufempfänger, bei welchem von der Teilnehmereinrichtung (TE) eine Verbindung zu einer Funkzentrale (FVSt) herstellbar ist und bei welchem anschließend die Weiterleitung erfolgt, **dadurch gekennzeichnet,** daß nach erfolgter Weiterleitung eine in der Teilnehmereinrichtung (TE) angeordnete Steuereinrichtung (ST) den Empfang von Quittungssignalen von der Funkzentrale (FVSt) überwacht und gegebenenfalls eine erneute Nachrichtenübertragung einleitet.

2. Nachrichtenübertragungssystem nach Anspruch 1, **dadurch gekennzeichnet,** daß die Funkzentrale (FVSt) als Quittungssignale Signale nach dem Mehrfrequenz-Codewahl-Verfahren zu der Teilnehmereinrichtung (TE) übermittelt, welche von einer mit der Steuereinrichtung (ST) verbundenen Auswerteeinrichtung (E) detektiert werden.

3. Nachrichtenübertragungssystem nach Anspruch 1, **dadurch gekennzeichnet,** daß die Funkzentrale (FVSt) als Quittungssignal eine Sprachansage zu der Teilnehmereinrichtung (TE) übermittelt, welche von einer mit der Steuereinrichtung (ST) verbundenen Sprachanalyseeinrichtung (SA) ausgewertet wird.

4. Nachrichtenübertragungssystem nach einem oder mehreren der Ansprüche 1 bis 3, **dadurch gekennzeichnet,** daß mit der Steuereinrichtung (ST) ein Wählautomat (WA) und/oder eine Funkuhr (FU) verbunden sind, wodurch bei fehlendem Quittungssignal wiederholt eine Weiterleitung in bestimmten Zeitabständen durchführbar ist.

Fig. 1

Fig. 2